Europäisches Patentamt

European Patent Office

Office européen des brevets

(11) Veröffentlichungsnummer: **0 031 523**
A1

## EUROPÄISCHE PATENTANMELDUNG

(21) Anmeldenummer: **80107821.3**

(22) Anmeldetag: **11.12.80**

(51) Int. Cl.³: **F 24 J 1/00,** A 47 J 36/28

(30) Priorität: **28.12.79 CH 11490/79**

(43) Veröffentlichungstag der Anmeldung: **08.07.81**
**Patentblatt 81/27**

(84) Benannte Vertragsstaaten: **AT BE DE FR GB IT NL SE**

(71) Anmelder: **IMPAMA ANSTALT, Altenbachstrasse 17, FL-9490 Vaduz (LI)**

(72) Erfinder: **Nabli, Chadly, 1 Boulevard Khéreddine, Radès (TN)**

(74) Vertreter: **Schaad, Walter F. et al, Patentanwälte W.F. Schaad, V. Balass E.E. Sandmeier Dufourstrasse 101, CH-8008 Zürich (CH)**

(54) **Heizelement, insbesondere für Konservendosen.**

(57) Das Heizelement enthält in einem von einer Dose (13) umschlossenen metallischen Tiegel (14) eine Füllung (9), welche durch chemische Reaktion Wärme erzeugt. Der Tiegel (14) ist zwischen einer metallischen Heizplatte (2) und einer Wärmespeicherplatte (6) eingespannt und von einer ringförmigen Luftkammer (15) umgeben. Die Dose ist mit einer Isolation (7) aus Steinwolle ausgekleidet, welche die Verspannung des Tiegels aufrecht erhält. Das Heizelement eignet sich insbesondere zum Erwärmen von Konserven in Büchsen.

Heizelement, insbesondere für Konservendosen

Die Erfindung betrifft ein Heizelement nach dem Oberbegriff von Patentanspruch 1.

Bekannt ist ein Heizelement, bei dem das das Gemisch von Metalloxid- und Reduktionspulvern enthaltende Metallgefäss sich im wesentlichen über die ganze Fläche unter dem Boden des zu erwärmenden Gegenstandes erstreckt. Diese Anordnung, die eine gute Verteilung der im Innern des Metallgefässes entwickelten Wärme gewährleisten soll, weist jedoch den Nachteil auf, dass damit eine Reaktion zwischen allen in das Gefäss gebrachten pulverförmigen Materialien nicht gewährleistet ist, so dass das Vorhandensein von nicht verbrannten Anteilen die Freisetzung der gesamten verfügbaren Wärme beschränkt.

Noch von grösserem Nachteil ist allerdings die Tatsache, dass die Erwärmung des fraglichen Gegenstandes, wie z.B. der Konservendose auf die Abbrenndauer des Wärmeerzeugers beschränkt ist. Eine Erhitzung des Inhaltes der Dose auf eine ausreichende Temperatur lässt sich dabei in vielen Fällen nicht erzielen.

Aufgabe der Erfindung ist deshalb die Schaffung eines Heizelementes, das eine verlängerte Heizdauer aufweist.

Allgemein formuliert besteht die erfindungsgemässe Lösung dieser Aufgabe darin, die Heizdauer des Gegenstandes durch teilweise Speicherung der vom Wärmeerzeuger freigesetzten Wärme und verzögerte Abgabe der gespeicherten Wärme auf ein Mehrfaches der Abbrenndauer zu verlängern.

Konkret wird dies dadurch erreicht, dass der metallothermische Wärmeerzeuger mit einem vom Wärmeisolierkörper abgeschirmten Wärmespeicher in Berührung steht und mit der distanziert angeordneten Heizplatte durch einen Wärmeleitkörper kleinen Querschnitts verbunden ist, und dass der Wärmespeicher zur Abgabe von Wärme an die Heizplatte auf einem vom Wärmeleitkörper unabhängigen Weg ausgebildet ist.

Durch diese Anordnung gelangt nur ein reduzierter Teil der vom Wärmeerzeuger produzierten Wärme unmittelbar an die Heizplatte, womit auch verhindert wird, dass an der Heizplatte bzw. an der Dose Temperaturen entstehen, die zu einer Zerstörung führen könnten. Jedenfalls fliesst ein wesentlicher Teil erzeugter Wärme in den Wärmespeicher und heizt diesen auf. Die gespeicherte Wärme wird wieder abgegeben, sobald in Richtung der Heizplatte ein Temperaturgefälle entstanden ist.

Nachfolgend ist eine beispielsweise Ausführungsform des erfindungsgemässen Heizelementes an Hand der Zeichnung näher erläutert. Es zeigen:

Fig. 1, das Heizelement schematisch im Vertikalschnitt, und

Fig. 2. den Tiegel in perspektivischer Darstellung.

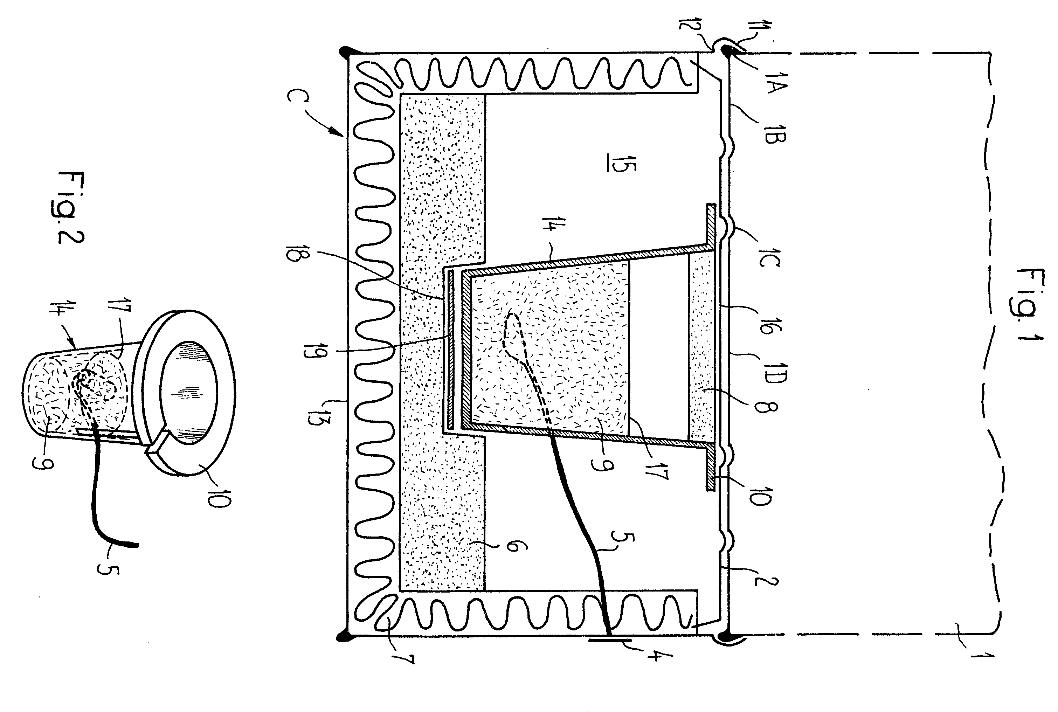

In Fig. 1 ist mit gestrichelten Linien ein Gegenstand 1 dargestellt, beispielsweise eine Konservenbüchse mit einem Boden 1B, der einen Mittelteil 1D, vorspringende Umfangsnuten 1C und einen Aussenrand 1A aufweist. Der Aussenrand 1A der Büchse ruht auf der oberen Schulter 12 einer Dose 13, beispielsweise aus Weissblech, eines allgemein mit C bezeichneten Heizelementes. Der Rand 1A der Büchse ist durch einen Bördelrand 11 der Dose mit dieser fest verbunden.

Das Heizelement C umfasst einerseits einen Tiegel 14 aus Stahl mit einem Durchmesser, der wesentlich kleiner ist als der Gesamtdurchmesser, und andererseits aus einer ebenfalls aus Stahl bestehenden Heizplatte 2, die auf dem Tiegel 14 ruht und sich im wesentlichen über den gesamten Querschnitt des Heizgerätes C erstreckt, wobei die zylinderförmige Dose 13 einen Aussendurchmesser entsprechend dem Durchmesser der zu erwärmenden zylindrischen Büchse 1 aufweist.

Der Tiegel 14 (Fig. 2) weist einen flachen oberen ringförmigen Flansch 10 auf, der gegen die Unterseite des Mittelteils 16 der Heizplatte 2 drückt. Eine Füllung aus einem Gemisch aus Metalloxid- und Reduktionspulvern in einem Beutel 17 befindet sich im Tiegel 14, ohne dessen Innenraum ganz auszufüllen. Ein in die Füllung 9 eingelegtes Zündorgan 5 führt durch einen Schlitz im Tiegel 14 heraus, verläuft bis zur Aussenseite der Dose und ist am freien Ende durch ein Schutzband 4 abgedeckt.

Das Pulvergemisch kann ein stöchiometrisches Gemisch von Eisenoxid ($Fe_2O_3$) und Aluminium ($Al_2$) sein, während das Zündorgan 5 ein Magnesiumband mit einem Bariumoxidbelag oder eine Lunte sein kann.

Die Heizplatte 2 verläuft über den grösseren Teil des
Bodens 1B der Büchse 1 und weist Wellungen auf, die
den Nuten 1C des Bodens entsprechen. Dabei ist der ringförmige äussere Teil der Platte 2 etwas zurückspringend,
während der Mittelteil 16 der Platte 2 mit dem Mittelteil 1D des Büchsenbodens in Berührung steht. Die Heizplatte 2 weist in der Zone, die ausserhalb der Berührungsfläche mit dem Flansch 10 des Tiegels 14 liegt,
mehrere, nicht dargestellte, radial verlaufende
Schlitze auf, die den Zweck haben, eine regelmässige
Dehnung der Platte 2 bei der Erwärmung zu ermöglichen.
Die Platte 2 kann sich dabei kuppelförmig aufwölben,
ohne sich örtlich auszubauchen, so dass eine optimale
Wärmeübertragung an den Boden 1B der Büchse 1 gewährleistet ist.

Das oben offene Ende des Tiegels 14 enthält einen
Pfropfen oder Zapfen 8, der aus Gips oder einer Mischung
von Gips und Sand besteht, und die Heizplatte 2 gegenüber der Füllung 9 abschirmt.

Der Tiegel 14 ruht in einer Vertiefung 18 eines Wärmespeichers 6. Der Wärmespeicher, der die Form einer kreisförmigen Platte aufweist, besteht vorzugsweise aus Gips
oder einem einen hohen Anteil an Gips enthaltenden
Material. Die Wärmespeicher-Platte 6 ist mit Ausnahme
ihrer Oberseite von einer Wärmeisolation 7, z.B. aus
Steinwolle, umgeben, die eine Auskleidung der Dose 13
bildet. Vorzugsweise ist in der Vertiefung 18 unter dem
Tiegel 14 noch eine metallische Schutzscheibe 19 angeordnet, welche bei einem Durchschmelzen des Tiegelbodens
eine zusätzliche Sicherheit bietet.

Zwischen dem Tiegel 14 und der Isolation 7 ist eine
ringförmige Luftkammer 15 gebildet, die sich von der

0031523

(freien) Oberfläche der Wärmespeicherplatte 6 bis zur
(freien) Unterseite der Heizplatte bzw. dem Flansch 10
des Tiegels 14 erstreckt. Die zumindest im Bereich
des Dosenbodens verdichtete Isolation 7 presst über
die Platte 6 den Tiegel 14 an die Unterseite der Heizplatte und hält einen innigen Kontakt auch dann aufrecht, wenn die Heizplatte sich nach oben wölben sollte.

Die Heizplatte 2 ist vorzugsweise über die Isolation 7
in der Dose 13 gefasst, so dass zwischen diesen Teilen
ein metallischer Kontakt nicht besteht. Vorzugsweise
ist der Bördelrand 11 der Dose an seiner Innenseite
mit einer Lack- oder Farbschicht versehen, welche ihrerseits dichtend wirkt und andererseits eine Wärmebrücke
zwischen Dose 13 und Büchse 1 ebenfalls vermeidet.

Der Tiegel 14 besitzt, obwohl er einen Wärmeleitkörper
bildet, eine vergleichsweise geringe Wandstärke und
der Flansch 10 ist 1 - 2,5 mm dick. Im Verhältnis zum
Durchmesser der zu erwärmenden Büchse beträgt der
Aussendurchmesser des Tiegels etwa die Hälfte.

Bei der Entzündung der Füllung 9 mit Hilfe des freigelegten Endes des Zündorganes 5 findet im Tiegel 14
eine intensive exothermische Reaktion statt. Die freiwerdende Wärme wird vorerst durch Wärmeleitung über die
Wandung des Tiegels und dessen Flansch 10 an die Heizplatte 2 übertragen. Ein anderer Teil der freiwerdenden
Wärme wird durch Wärmeübergang an die Luft bzw. Strahlung und Konvektion im Bereich der Luftkammer von der
Wandung des Tiegels freigegeben. Da allerdings nur ein
Teil der während der Reaktion anfallenden Wärme auf
diese Weise abgeführt werden kann, erhitzt sich der
Tiegel 14 sehr stark und infolge der innigen Berührung
mit der Wärmespeicherplatte 6 wird dieser etwas langsamer ebenfalls aufgeheizt. Infolge der Isolation
7 sowie der hohen Temperatur der Luft in der Kammer 15
kann die Wärmespeicherplatte während der Dauer der
Reaktion im Tiegel 14 praktisch keine Wärme abgeben.

Infolge der schlanken Gestalt des hutförmigen Tiegels
14 bildet sich während der Reaktion an dessen Grund
ein Bodensatz aus Korund hoher Dichte und hoher
Temperatur, welcher eine vollständige Reaktion der
Füllung gewährleistet.

Ist die Reaktion der Füllung 9 abgeschlossen, so wirkt
der Tiegel 14 weiterhin als Wärmeleitkörper einerseits
für die im Korund noch enthaltene Wärme und andererseits auch für einen Teil der in der Wärmespeicherplatte 6 enthaltenen Energie. Einen nicht unwesentlichen
Teil ihres Energieinhaltes gibt die Platte 6 aber durch
Strahlung und Konvektion ab und diese Wärme ist in der
Lage, die Büchse 1 bzw. ihren Inhalt über die Heizplatte auch nach Beendigung der Reaktion im Tiegel
weiter aufzuheizen und gegebenenfalls einer Abkühlung
des Inhaltes nach dem Oeffnen der Büchse entgegenzuwirken.

Beispielsweise ist es mit einer Füllung 9 von etwa 20 g
möglich, eine Büchse 1 mit einem Inhalt von 250 cm$^3$
innerhalb von ca. 3 Minuten auf eine Temperatur von
55$^{\circ}$C zu erhitzen und diese während ca. 20 Minuten
aufrecht zu erhalten. Die Temperatur des Tiegels
hält sich dabei unterhalb von etwa 1100$^{\circ}$C und diejenige der Heizplatte 2 unterhalb von etwa 200$^{\circ}$C.

Wie festzustellen ist, absorbiert die federnde Steinwolle mit ihrem Lufteinschluss kleinere entwichene

- ¥ -    0031523

Wärmemengen und verhindert eine übermässige Wärmeabgabe an die Umgebung.

In einem weiteren Ausführungsbeispiel enthält der
Tiegel 14 eine aluminothermische Paste auf Sandbasis,
wodurch die Reaktionsgeschwindigkeit herabgesetzt
wird. Ausserdem könnte für die Platte 6 auch ein
Sandgips verwendet werden.

Es ist darauf hinzuweisen, dass die in der Kammer 15
enthaltene Luft zumindest während einem Teil der
Reaktionsdauer als Isolation wirkt und erst allmählich als Wärmeträger wirksam wird.

Das erfindungsgemässe Heizelement, das mit Vorteil mit
einem Behälter der Art einer Konservenbüchse eingesetzt wird, die durch Kerb-, Bördel- oder Quetschverbindung daran befestigt wird, kann auch ganz einfach
ein Heizelement sein, das vom zu erwärmenden Gegenstand unabhängig ist. Die Anwendungen des erfindungsgemässen Heizelementes in Modulbauweise sind vielfach
und betreffen mit Vorteil die Wiedererwärmung eines
aufzulegenden Gegenstandes auf eine Temperatur zwischen
ca. 40 und 60$^{\circ}$C. So lässt sich das erfindungsgemässe
Heizelement in Kombination mit Heizplatten, z.B. zur Gewährleistung der Vorerwärmung von Beton verwenden.

Es kann zweckmässig sein, die gegen die Luftkammer 15 gerichtete Aussenseite des Tiegels 14 mit einer Wärmedämmungs-Schicht (nicht dargestellt) zu versehen, welche
die Abgabe von Tiegel-Wärme unmittelbar an die Luft durch
Konvektion  und Strahlung verringert. Hierzu kommt ein
Farbanstrich in Betracht, der unter erhöhter Temperatur
anschwillt.

P a t e n t a n s p r ü c h e

1. Heizelement, insbesondere für Konservendosen, mit einem mit einer Zündvorrichtung versehenen, zwischen einer Heizplatte und einem Wärmeisolierkörper angeordneten, mit einer exothermen chemischen Reaktion arbeitenden Wärmeerzeuger, dadurch gekennzeichnet, dass der metallothermische Wärmeerzeuger (9) mit einem vom Wärmeisolierkörper (7) abgeschirmten Wärmespeicher (6) wärmeleitend in Verbindung steht, der von der Heizplatte (2) distanziert angeordnet ist, und dass der Wärmespeicher zur Abgabe von Wärme an die Heizplatte (2) ausgebildet ist.

2. Heizelement nach Anspruch 1, gekennzeichnet durch eine Luftkammer (15), welche einerends durch den Wärmespeicher (6) und andernends durch die Heizplatte (2) begrenzt ist.

3. Heizelement nach Anspruch 2, dadurch gekennzeichnet, dass sich zwischen Heizplatte (2) und Wärmespeicher (6) mindestens ein Wärmeleitkörper (14) erstreckt.

4. Heizelement nach Ansprüchen 1, 2 oder 3, dadurch gekennzeichnet, dass die Heizplatte (2) den Deckel einer metallischen Dose (13) bildet, für welche der Isolierkörper (7) eine Auskleidung bildet.

13.11.80
WFS:ps

A 3336

5. Heizelement nach den Ansprüchen 2 oder 4, dadurch gekennzeichnet, dass die Luftkammer (15) ringförmig ist, wobei ihre äussere Begrenzung durch den Isolierkörper gebildet und wobei innerhalb der Luftkammer der Wärmeerzeuger (9) angeordnet ist.

6. Heizelement nach Anspruch 3, dadurch gekennzeichnet, dass der Wärmeleitkörper durch einen hutförmigen metallischen Tiegel (14) gebildet ist, der den Wärmeerzeuger als Füllung (9) enthält.

7. Heizelement nach Anspruch 6, dadurch gekennzeichnet, dass der hutförmige Tiegel (14) an seinem offenen Ende einen Flansch (10) aufweist, der an der Heizplatte (2) anliegt.

8. Heizelement nach einem der vorangehenden Ansprüche, dadurch gekennzeichnet, dass die Heizplatte mehrere über den Umfang verteilte radiale Schlitze aufweist.

9. Heizelement nach Anspruch 6, dadurch gekennzeichnet, dass der Tiegel (14) sich in eine Vertiefung (18) im Wärmespeicher (6) erstreckt, welche eine metallische Scheibe (19) enthält.

10. Heizelement nach den Ansprüchen 6, 7 oder 9, dadurch gekennzeichnet, dass der Tiegel (14) einen zwischen der Füllung (9) und der Heizplatte (2) angeordneten Zapfen (8) aufweist.

11. Heizelement nach Anspruch 10, dadurch gekennzeichnet, dass der Zapfen (8) aus einer Mischung gebildet ist, welche Gips und Sand enthält.

- 3 -

12. Heizelement nach einem der vorangehenden Ansprüche, dadurch gekennzeichnet, dass der Wärmespeicher (6) durch eine kreisförmige Platte aus Gips gebildet ist.

13. Heizelement nach Anspruch 6, dadurch gekennzeichnet, dass der aus verdichteter Steinwolle bestehende Isolierkörper (7) den Tiegel (14) über den Wärmespeicher (6) an die Heizplatte (2) anpresst.

14. Heizelement nach einem der vorangehenden Ansprüche, dadurch gekennzeichnet, dass die Füllung (9) Eisenoxyd und Aluminium enthält.

15. Heizelement nach einem der vorangehenden Ansprüche, dadurch gekennzeichnet, dass die Füllung (9) ganz oder teilweise aus einer aluminothermischen Paste auf Sandbasis gebildet ist und ein Oxydelement, z. B. Manganoxyd enthält.

16. Heizelement nach Anspruch 6, dadurch gekennzeichnet, dass der Tiegel (14) an seiner der Luftkammer zugekehrten Aussenseite eine Wärmedämmungs-Schicht aufweist.

Fig. 1

Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------------------|-------------------|
| A | DE - A - 2 426 129 (SATO) <br> + Gesamt + <br> -- | 1 |
| A | DE - A - 1 804 500 (BRUWER) <br> + Gesamt + <br> -- | 1 |
| A | FR - A1 - 2 348 121 (MINCIONE) <br> + Gesamt + <br> -- | 1 |
| A | FR - A - 2 185 055 (READI) <br> + Gesamt + <br> -- | 1 |
| A | GB - A - 946 557 (RYAN) <br> + Gesamt + <br> -- | 1 |
| A | US - A - 3 653 372 (DOUGLAS) <br> + Gesamt + <br> --- | 1 |
| A | US - A - 3 683 889 (HOFFMANN) <br> + Gesamt + <br> ---- | 1 |

**KLASSIFIKATION DER ANMELDUNG** (Int. Cl.³)

F 24 J 1/00
A 47 J 36/28

**RECHERCHIERTE SACHGEBIETE** (Int. Cl.³)

F 24 J 1/00
A 47 J 36/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---------------|----------------------------|--------|
| WIEN | 24-02-1981 | KREHAN |

EPA form 1503.1  06.78